# EUROPÄISCHE PATENTSCHRIFT

(11) **EP 1 597 877 B1**
(45) Veröffentlichungstag und Bekanntmachung des Hinweises auf die Patenterteilung: **13.09.2006**
(21) Anmeldenummer: 04709232.5
(22) Anmeldetag: 09.02.2004
(51) Int. Cl.: H04L 12/56

(54) **VERFAHREN ZUR SCHNELLEN REAKTION AUF LINKAUSFÄLLE ZWISCHEN VERSCHIEDENEN ROUTING-DOMÄNEN**
RAPID RESPONSE METHOD FOR THE FAILURE OF LINKS BETWEEN DIFFERENT ROUTING DOMAINS
PROCEDE POUR REAGIR RAPIDEMENT A DES DEFECTIONS DE LIAISON ENTRE DIFFERENTS DOMAINES DE ROUTAGE

(30) Priorität: 28.02.2003 EP 03004532
(43) Veröffentlichungstag der Anmeldung: 23.11.2005
(73) Patentinhaber: SIEMENS AKTIENGESELLSCHAFT, 80333 München (DE)
(72) Erfinder: BLESS, Roland, 76187 Karlsruhe (DE); LICHTWALD, Götz, 77839 Lichtenau/Ulm (DE); SCHMIDT, Markus, 77746 Schutterwald (DE)
(86) Internationale Anmeldenummer: PCT/EP2004/001171
(87) Internationale Veröffentlichungsnummer: WO 2004/077759

(56) Entgegenhaltungen:
- US-A1- 2002 131 362
- REKHTER Y ET AL: "A Border Gateway Protocol 4 (BGP-4)" IETF/RFC 1771, [Online] März 1995 (1995-03), XP002226832 Gefunden im Internet: URL:http://www.faqs.org/rfcs/rfc1771.html> [gefunden am 2003-05-09]
- MIYAGI T ET AL: "A NOVEL ROUTE RECONSTRUCTION PROTOCOL FOR P-MP COMMUNICATION OVER WIRELESS AD-HOC NETWORK" VTC 2000-SPRING. 2000 IEEE 51ST. VEHICULAR TECHNOLOGY CONFERENCE PROCEEDINGS. TOKYO, JAPAN, MAY 15-18, 2000, IEEE VEHICULAR TECHNOLGY CONFERENCE, NEW YORK, NY: IEEE, US, Bd. 2 OF 3. CONF. 51, 15. Mai 2000 (2000-05-15), Seiten 1522-1526, XP000968125 ISBN: 0-7803-5719-1

## Beschreibung

Die Erfindung betrifft ein Verfahren zur schnellen Reaktion auf den Ausfall eines Links zwischen zwei Routing-Domänen in einem paketorientierten Netz.

Die Erfindung liegt auf dem Gebiet der Internet-Technologien bzw. spezifischer auf dem Gebiet der Routing-Verfahren in paketorientierten Netzen und zielt auf die Übertragung von Daten unter Echtzeitbedingungen.

Die derzeit wohl wichtigste Entwicklung auf dem Gebiet der Netze ist die Konvergenz von Sprach- und Datennetzen. Ein wichtiges Zukunftsszenario ist, dass Daten, Sprache und Videoinformationen über ein paketorientiertes Netz übertragen werden, wobei neuentwickelte Netztechnologien die Einhaltung von Anforderungsmerkmalen für verschiedene Verkehrsklassen gewährleisten. Die zukünftigen Netze für verschiedene Arten von Verkehr werden paketorientiert arbeiten. Aktuelle Entwicklungstätigkeiten betreffen die Übertragung von Sprachinformationen über herkömmlich für Datenverkehr verwendete Netze, vor allem IP (Internet Protokoll) basierte Netze.

Um Sprachkommunikation über Paketnetze und insbesondere IPbasierte Netze in einer Qualität zu ermöglichen, die der Sprachübertragung über leitungsvermittelte Netze entspricht, müssen Qualitätsparameter wie z.B. die Verzögerung von Datenpaketen oder der Jitter in engen Grenzen gehalten werden. Bei Sprachübertragung ist von großer Bedeutung für die Qualität des angebotenen Dienstes, dass die Verzögerungszeiten Werte von 150 Millisekunden nicht wesentlich übersteigen. Um eine entsprechend geringe Verzögerung zu erreichen, wird an verbesserten Routern und Routing-Algorithmen gearbeitet, die eine schnellere Bearbeitung der Datenpakete ermöglichen sollen.

Beim Routing über IP-Netze wird üblicherweise zwischen Intradomain- und Interdomain-Routing unterschieden. Bei einer Datenübertragung über das Internet sind üblicherweise Netze - man spricht hier auch von Teilnetzen, von Domänen oder sogenannten Autonomen Systemen (vom Englischen Autonomous System) - verschiedener Netzbetreiber involviert. Die Netzbetreiber sind zuständig für das Routing innerhalb der Domänen, die in ihren Zuständigkeitsbereich fallen. Innerhalb dieser Domänen haben sie die Freiheit, die Vorgehensweise beim Routing nach eigenen Wünschen beliebig anzupassen, solange nur Dienstgütemerkmale eingehalten werden können. Anders stellt sich die Situation beim Routing zwischen verschiedenen Domänen dar, bei dem unterschiedliche Domänenbetreiber miteinander in Verbindung treten. Interdomain-Routing wird dadurch verkompliziert, dass einerseits möglichst optimale Pfade über verschiedene Domänen zu dem Ziel bestimmt werden sollen, andererseits aber Domänenbetreiber lokal Strategien anwenden können, die eine globale Berechnung von optimalen Pfaden nach objektiven Kriterien erschweren. Beispielsweise besteht eine Strategie darin, für Verkehr einer bestimmten Herkunft Domänen von Netzbetreibern eines bestimmten Landes zu vermeiden. Diese Strategie ist nun aber in der Regel nicht allen Netzbetreibern mit Domänen, über die der Verkehr geroutet wird, bekannt, d.h. ein Netzbetreiber muss lokal eine Entscheidung bezüglich der Domäne treffen, zu der er Verkehr weiterleitet, ohne über vollständige Informationen über den optimalen Weg im Sinne einer Metrik zu verfügen. Die Strategien werden häufig auch mit dem englischen Ausdruck "Policies" bezeichnet.

Für das Routing zwischen verschiedenen Domänen werden sogenannten Exterior-Gateway-Protokolls EGP verwendet. Im Internet wird derzeit meist das in dem RFC (Request for Comments) 1771 genauer beschriebene Border-Gateway-Protokoll Version 4 (Border-Gateway-Protokoll wird häufig mit BGP abgekürzt) verwendet. Das Border-Gateway-Protokoll ist ein sogenanntes Path-Vector-Protokoll. Eine BGP-Instanz (der Ausdruck "BGP-Speaker" findet sich häufig in englischsprachigen Literatur) wird von seinen BGP-Nachbarn über mögliche Wege zu über den jeweiligen BGP-Nachbar zu erreichenden Zielen informiert. Anhand von ebenfalls mitgeteilten Eigenschaften der Wege (im Englischen path attributes) enthält die BGP-Instanz zu den erreichbaren Zielen den aus ihrer lokalen Sicht jeweils optimalen Weg. Im Rahmen des BGP-Protokolls werden zwischen BGP-Instanzen vier Typen von Nachrichten ausgetauscht, darunter eine sogenannte Update- oder Aktualisierungsnachricht, mit der Weginformationen durch das ganze Netz propagiert werden und die erlaubt, das Netz entsprechend Topologie-Änderungen zu optimieren. Die Aussendung von Aktualisierungsnachrichten führt üblicherweise zu einer Anpassung der Pfadinformationen bei allen BGP-Instanzen des Netzes im Sinne eines entsprechend der lokal vorliegenden Informationen optimierten Routings. Daneben spielen sogenannte Keepalive- oder Zustandsbestätigungsnachrichten eine Rolle, mit denen eine BGP-Instanz seinen BGP-Nachbarn über seine Funktionsfähigkeit aufklärt. Bei Ausbleiben dieser Nachrichten gehen die BGP-Nachbarn davon aus, dass der Link zu der BGP-Instanz gestört ist.

Patent US 2002/131362 offenbart ein Verfahren zur Reaktion auf Linkausfälle zwischen verschiedenen Routing-Domänen

Die Propagation von Topologie-Informationen mit Hilfe des BGP-Protokolls hat den Nachteil, dass bei häufigen Änderungsanzeigen eine beträchtliche Last der durch das Netz propagierten Nachrichten zur Anzeige der Änderung auftreten, und dass das Netz nicht auskonvergiert, wenn Änderungsnachrichten zu schnell aufeinander folgen. Dieses Problem, dass das Netz nicht auskonvergiert bzw. dass das Interdomain-Routing nicht stabil wird, wurde durch den sogenannten Route-flap-damping-Ansatz angegangen. Die Idee hinsichtlich dieses Konzepts ist, die Anzeige einer Änderung durch einen BGP-Nachbarn mit einer Sanktion zu belegen. Bei Empfang einer Änderungsnachricht wird der Dämpfungsparameter erhöht und bei Überschreiten einer Schwelle durch den Dämpfungsparameter werden Änderungsmeldungen ignoriert. Bei Abwesenheit von Änderungsmeldungen wird der Wert des Dämpfungsparameters erniedrigt. Als Folge davon werden Änderungsmeldungen von BGP-Instanzen ignoriert, wenn die Häufigkeit der Änderungsmeldungen zu hoch ist. Die Reaktion des Netzes auf temporäre Instabilitäten wird dadurch verlangsamt bzw. abgeschwächt. Das Verfahren hat jedoch den Nachteil, dass es die Reaktion des Netzes auf länger dauernde Störungen (im Englischen verwendet man hier den Ausdruck "Persistant Errors") verzögert. Vor allem in Hinblick auf Echtzeitverkehr ist es nachteilig, wenn Störungen des Inter-domain-Routings nur auf einer längeren Zeitskala behoben werden.

Die Erfindung hat zur Aufgabe, ein Verfahren anzugeben, das eine schnelle Reaktion auf Störungen beim Interdomain-Routing erlaubt und gleichzeitig die Nachteile herkömmlicher Verfahren vermeidet.

Die Aufgabe wird durch ein Verfahren nach Anspruch 1 gelöst.

Erfindungsgemäß wird bei Ausfall eines Links zwischen zwei Routing-Domänen ein Ersatzweg bzw. Ersatzpfad bereitgestellt. Das Interdomänen-Routing entlang dieses Ersatzweges wird so eingestellt, dass Datenpakete, die normalerweise über den gestörten Link geroutet würden, entlang des Ersatzweges zu ihrem Ziel geleitet werden. Unter Linkausfall wird dabei jede Störung verstanden, die die Verbindung bzw. die Connectivity zwischen zwei Routing-Domänen unterbricht.

Eine Routing-Domäne (die Ausdrücke "Autonomes System" oder "Teil-" bzw. "Subnetz" finden sich auch in der Literatur) ist durch einheitliches Routing innerhalb der Domäne gekennzeichnet. Beispielsweise werden innerhalb einer Domäne Pakete mittels des OSPF (Open shortest path first) Protokolls geroutet. Hier stellen wir eine Maßnahme beim Routing zwischen Domänen - im folgenden Interdomänen-Routing genannt - vor, das erlaubt, auf Linkausfälle zwischen Domänen schnell zu reagieren. Dabei wird der Linkausfall von einer Routing-Domäne festgestellt. Das kann beispielsweise durch einen Router der Routing-Domäne geschehen, der mit Protokollsoftware für Interdomain-Routing ausgestattet ist. Bei dem BGP-Protokoll spricht man in so einem Fall von einem BGP-Speaker oder einer BGP-Instanz. Nach Feststellung des Ausfalls wird die Nachricht über den Linkausfall propagiert, jedoch nicht durch das ganze Netz, sondern nur entlang eines oder mehrerer Ersatzwege. Router entlang des bzw. der Ersatzwege stellen ihr Inter-domänen-Routing so ein, dass Pakete entlang des bzw. der Ersatzwege geroutet werden können. Das geschieht beispielsweise durch Änderung von Routing-Tabellen von den auf dem Ersatzweg liegenden Domänen zugehörigen Routern mit Interdomänen-Protokoll-Funktionalität. Ein Weiterpropagieren einer Nachricht über den Linkausfall entlang des Ersatzweges durch eine EGP Routing Instanz kann unterbleiben, wenn von der EGP Routing Instanz ein den ausgefallenen Link vermeidendes Routing zum Ziel des Ersatzweges bereits vorgesehen ist. Dies kann durch die Topologie des Netzes oder aber durch eine bereits erfolgte Benachrichtigung der EGP Routing Instanz aus anderer Richtung, z.B. ausgehend von einer anderen über den Linkausfall informierten EGP Instanz, bedingt sein.

Router mit Interdomänen-Protkoll-Funktionalität werden im weiteren auch als EGP-Instanzen bezeichnet. EGP (Exterior Gateway Protocol) ist dabei ein generischer Ausdruck für Inter-domänen-Protokolle, wie z.B. das BGP Protokoll. Das Einstellen des Interdomänen-Routings bei einer Domäne auf dem Ersatzweg kann auf folgende Weise geschehen: eine EGP-Instanz erhält eine Benachrichtigung über den Linkausfall. Darauf selektiert die EGP-Instanz für einen über den ausgefallenen Link führenden Weg einen Alternativweg. Über Alternativwege verfügt die EGP-Instanz beispielsweise durch Update-Nachrichten des BGP-Protokolls, die im Netz propagiert wurden und die von der EGP-Instanz zur Bestimmung einer Mehrzahl von Wegen zu verschiedenen Zielen benutzt wurden. Anhand des Alternativweges kann die nächste Routing-Domäne auf dem Alternativweg identifiziert werden. Die Adresse eines Routers - in der Regel eine EGP-Instanz - kann dann als nächstes Ziel bzw. als nächster Hop für das Routing in der Routing-Tabelle der EGP-Instanz festgelegt werden.

Hier und im folgenden wird folgende Unterscheidung zwischen Ersatzweg und Alternativweg gemacht. Der Ersatzweg ist der Weg, der aufgrund des erfindungsgemäßen Verfahrens für das Routing über einen Weg, der den ausgefallenen Link beinhaltet, festgelegt wird. Der Alternativweg bezieht sich auf eine lokale Wegewahl als Alternative für den ausgefallenen Weg. Bei dem Verfahren könnte neben der Information über den ausgefallenen Link auch eine Information über den gewählten Alternativweg propagiert werden. In der bevorzugten Variante wird dies jedoch nicht getan, sondern bei den auf dem Ersatzweg liegenden Routing-Domänen wird immer neu aufgrund der Information über den Linkausfall ein Alternativweg ausgewählt. Der Grund hierfür ist, dass häufig unterschiedliche Strategien von den einzelnen Netzbetreibern angewandt werden (Policies), die in der Regel anderen Netzbetreibern nicht bekannt sind. Daher kann häufig eine Routing-Domäne nur eine lokal gültige Entscheidung treffen, d.h., eine Entscheidung über das nächste Ziel im Sinne des Routings entlang eines Alternativweges. Ein lokal ausgewählter Alternativweg kann, muss aber nicht, mit dem schließlich sich ergebenden Ersatzweg übereinstimmen. So kann eine Routing-Domäne eine Auswahl eines Alternativweges treffen, die nicht mit der Wahl von dem Ersatzweg vorgelagerten Routing-Domänen übereinstimmt.

Die Erfindung hat den Vorteil, dass auf eine Störung schnell reagiert werden kann, ohne dass eine Propagation von Nachrichten durch das ganze Netz und eine anschließende Konvergenz hinsichtlich der Topologie vorgenommen werden müsste. Insbesondere bei zeitlich begrenzten Störungen braucht keine aufwändige Fehlerreaktion stattfinden.

Entsprechend einer Fortbildung wird von der von der Störung zuerst benachrichtigte Routing-Domäne bzw. von den benachtrichtigten Routing-Domänen, z.B. an beiden Enden eines gestörten Links, die Bereitstellung von Ersatzwegen für alle Wege angestoßen, die über den gestörten Link laufen. Für einen gestörten Weg können auch zwei oder mehr Ersatzwege bereitgestellt werden, wobei die zusätzlich bereitgestellten Ersatzwege als Backup oder für die Implementierung von Policies benützt werden können.

In einer Weiterbildung ist vorgesehen, mehr als einen Alternativpfad zu identifizieren. Der bzw. die zusätzlichen Alternativpfade können dann als Ersatz für den bevorzugten Pfad oder für das von Routing-Strategien abhängige Routing verwendet werden. Beispielsweise wird anhand von Informationen im Paketkopf entschieden, welcher der Alternativpfade zu verwenden ist.

In einer Variante ist ein Protokoll gegeben, das eine netzweite Propagation von Nachrichten zur Berechnung optimaler Wege vorsieht, beispielsweise das BGP-Protokoll. Entsprechend dieser Variante wird bei einem Linkausfall für eine Zeitspanne eine den Linkausfall berücksichtigende Neuermittlung von optimalen Wegen für das Interdomain-Routing mittels des Protokolls unterdrückt. Im Falle des BGP Protokolls wird z.B. der BGP Prozess auf dem von der Linkstörung benachrichtigten Router davon abgehalten, Update Nachrichten an weitere BGP Instanzen zu verschicken. Zudem kann der von der Linkstörung benachrichtigte Router als Proxy für nicht mehr erreichbare EGP-Instanzen agieren und Keepalive-Nachrichten versenden, die bei den BGP Prozessen anderer BGP Instanzen das ordnungsgemäße Funktionieren des ausgefallenen Links fingieren. Diese Funktion der Unterdrückung von Nachrichten kann nach der Zeitspanne dann außer Kraft gesetzt werden, so dass eine zweite Propagation von Nachrichten zur Ermittlung optimaler Wege erfolgt. Diese Weiterbildung hat den Vorteil, dass zwischen kurzfristigen und länger andauernden (im Englischen ist das Wort "persistent" üblich) Störungen unterschieden werden kann, wobei auf eine kurzfristige Störung mittels der Bereitstellung von Ersatzwegen reagiert wird und bei längerfristigen Störungen eine entsprechende Topologieanpassung innerhalb des Gesamtnetzes angestoßen wird.

Für die Behandlung von kurzfristigen Störungen ist es zusätzlich hilfreich, den durch den Ersatzweg ersetzten Weg als solchen zu kennzeichnen, dass dieser bei Erhalt einer Nachricht über die Wiederherstellung des Links zur Wiederverwendung bereitsteht.

Im folgenden wird der Erfindungsgegenstand im Rahmen eines Ausführungsbeispieles anhand von Figuren näher erläutert. Es zeigen:
- Fig. 1: Herkömmliche Reaktion beim Linkausfall mit BGP-Interdomain-Routing,
- Fig. 2: Erfindungsgemäße Reaktion auf einen Linkausfall,
- Fig. 3: Protokollablaufdiagramm,
- Fig. 4: Verwendung von Wegefächern zwecks Berücksichtigung von Routing-Strategien.

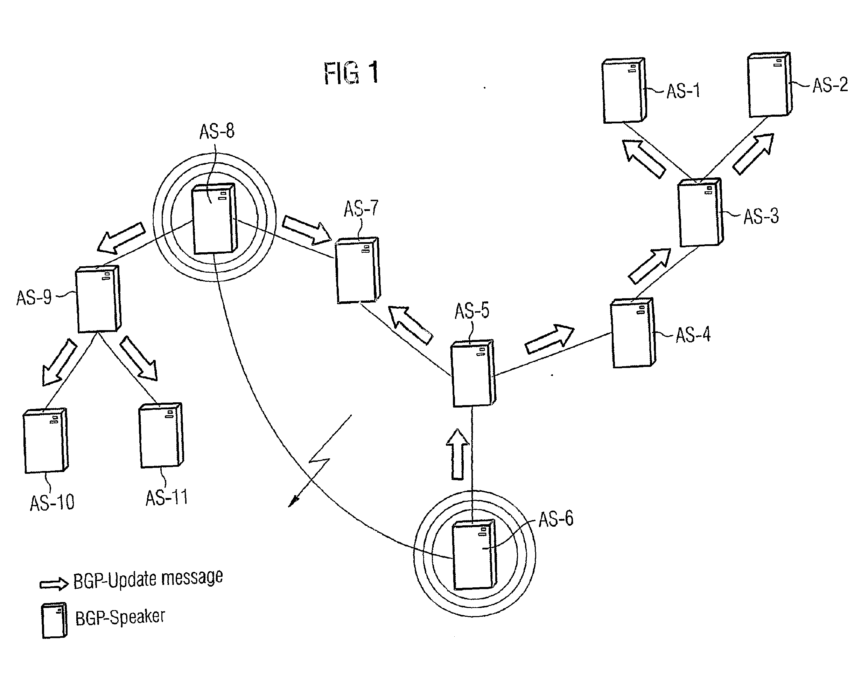

Fig. 1 zeigt elf autonome Systeme bzw. Routing-Domänen AS-1 bis AS-11 sowie Links, die die Autonomen Systeme miteinander verbinden. Die Autonomen Systeme kommunizieren miteinander mit Hilfe des BGP-Protokolls, wobei einzelne Router der Autonomen Systeme mit entsprechenden Protokollfähigkeiten ausgestattet sind. Man spricht hierbei von BGP-Speakern oder BGP-Instanzen. Mit Hilfe dieser BGP-Instanzen tauschen die Autonomen Systeme Nachrichten miteinander aus, die entweder den gespeicherten Zustand bestätigen oder für das Routing zu berücksichtigende Änderung mitteilen. In Figur 1 ist angedeutet, wie durch das BGP-Protokolls gesteuert auf einen Linkausfall reagiert wird. Der Link zwischen den Autonomen Systemen AS-6 und AS-8 ist dabei gestört. Als Reaktion auf die Störung - die Reaktion ist durch Pfeile kenntlich gemacht - werden sogenannte Update-Nachrichten in dem ganzen Netz propagiert bzw. die elf Autonomen Systeme AS-1, .., AS-11 erhalten Update-Nachrichten, die sie zu einer Neuberechnung von optimalen Wegen im Sinne einer lokalen Metrik verlassen.

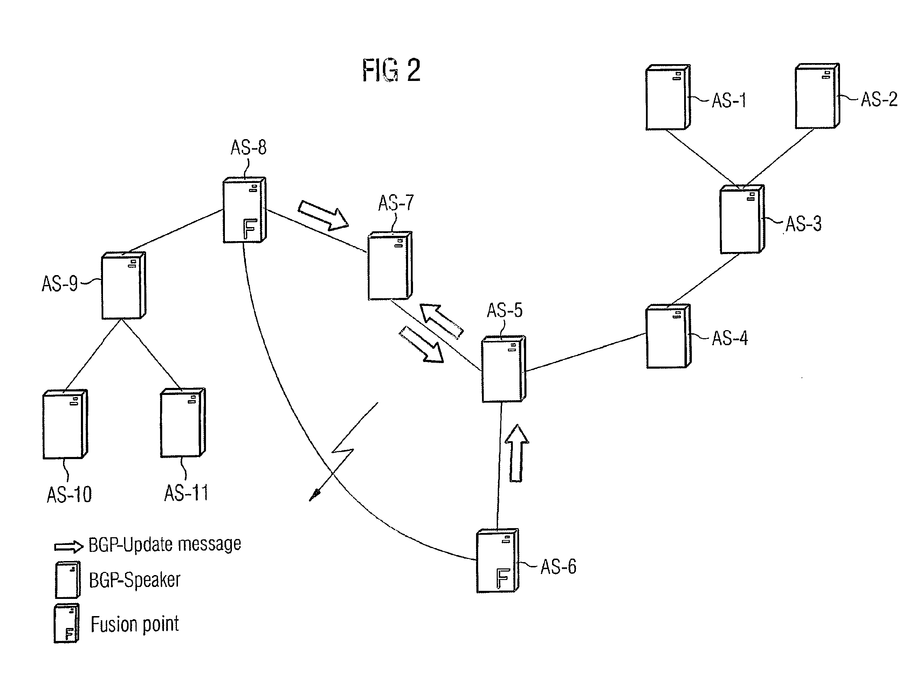

Fig. 2 zeigt die selbe Vernetzung von Autonomen Systemen wie Fig. 1. In Fig. 2 ist eine erfindungsgemäße schnelle Reaktion auf den Linkausfall zwischen den Autonomen Systemen AS-6 und AS-8 dargestellt. Erfindungsgemäß werden Nachrichten zu Autonomen Systemen geschickt, die auf Ersatzwegen für Wege, die über den ausgefallenen Link führen, liegen. Das Autonome System AS-8 sendet Nachrichten über den Linkausfall zu dem Autonomen System AS-7, dieses wiederum zu dem Autonomen System AS-5. Da das Autonome System AS-8 über die Autonomen Systeme AS-7 und AS-5 alle Autonomen Systeme auf der rechten Hälfte der Figur, d.h. die Autonomen Systeme AS-1 bis AS-4 und AS-6 erreichen kann, braucht von dem Autonomen System AS-5 die von AS-8 empfangene Nachricht über den Linkausfall nicht weiter propagiert zu werden. Analog sendet das autonome System AS-6 eine Nachricht zu dem Autonomen System AS-5. Dieses informiert daraufhin das autonome System AS-7. Von dem Linkausfall betroffen sind damit die Autonomen Systeme AS-5 bis AS-8, die Ersatzwege für über den ausgefallenen Link führende Wege bereitstellen bzw. identifizieren. Im Gegensatz zu der in Fig. 1 gezeigten herkömmlichen Reaktion brauchen keine Nachrichten über das ganze Netz propagiert zu werden. In der Figur erhalten die Autonomen System AS-1 bis AS-4 und AS-9 bis AS-11 keine Nachrichten über den Linkausfall und müssen keine Anpassungen durchführen.

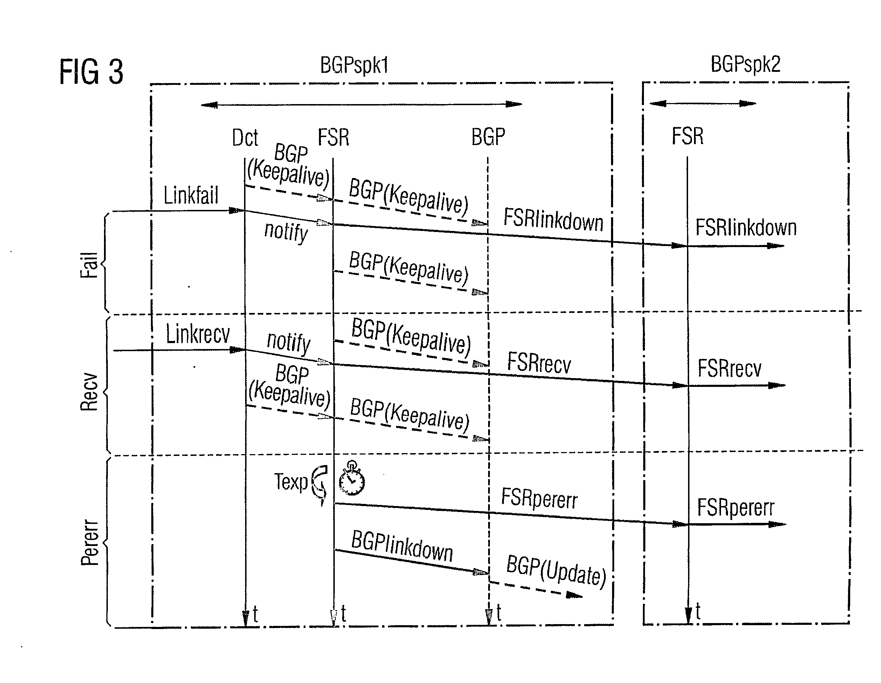

Bei einem Linkausfall, der länger anhält (persistent error), ist es sinnvoll, dass Nachrichten im ganzen Netz propagiert werden, um netzweit das Routing zu optimieren. Deshalb ist entsprechend Fig. 3 vorgesehen, BGP-Update-Nachrichten im ganzen Feld zu propagieren, wenn nicht nach einer bestimmten Zeitspanne, beispielweise 10 Minuten, sich der ausgefallene Link wieder erholt hat. Auf der vertikalen Achse in Fig. 3 sind drei verschiedene Phasen des erfindungsgemäßen Verfahrens gezeigt, nämlich die Phase, wo der Linkausfall erkannt wird Fail, die Phase, wo eine Erholung des Links signalisiert wird, wenn diese innerhalb der Zeitspanne stattfindet, Recv und eine Phase Pererr, die das Vorgehen zeigt, wenn es sich um einen länger dauernden Fehler handelt. Auf der horizontalen Achse sind zwei BGP-Speaker oder BGP-Instanzen gezeigt, nämlich BGPspk1, eine BGP-Instanz, die direkt den Fehler signalisiert bekommt, also zum Autonomen System gehört, das an den ausgefallenen Link grenzt, und die BGP-Instanz BGPspk2, die zu einem Autonomen System gehört, das durch die BGP-Instanz BGPspk über den Linkausfall informiert wird. Es sind drei Software- bzw. Protokollmodule von der ersten BGP-Instanz BGPspk1 gezeigt, nämlich DCT (steht für Detection), ein Modul, das den Linkausfall feststellt, das Modul FSR (für Fast Scope Rerouting), das für die erfindungsgemäße Reaktion bzw. Aussendung von Nachrichten sorgt und BGP, die entsprechende BGP-Protokoll-Software (man spricht in diesem Zusammenhang auch von einer BGP routing engine). Für die zweite BGP-Instanz ist das Fast-scope-rerouting-Modul FSR eingezeichnet. In dem Bild gehen Zeitachsen von oben nach unten, d.h. weiter unten liegende Nachrichten bzw. Ereignisse sind zeitlich später. Der Benachrichtigung über den Linkausfall Linkfail vorausgehend werden vom BGP-Protokoll vorgesehene sogenannte Keepalive-Nachrichten BGP(Keepalive) innerhalb der ersten BGP-Instanz BGPspk1 an die BGP-Software BGP weitergegeben, d.h. ein ordnungsgemäßes Funktionieren des Links wird signalisiert. Nach Ausfall des Links wird diese Störungen erkannt, beispielsweise durch Ausbleiben von Keepalive-Nachrichten BGP(Keepalive) (in der Fig.3 korrespondiert den Erkennen des Linkausfalls die Nachricht Linkfail). Der Linkausfall wird der FSR-Software mitgeteilt (die entsprechende Nachricht in der Fig.3 heißt notify). Die FSR-Software der BGP-Instanz 1 BGPspk1 schickt eine Nachricht FSRlinkdown an die FSR-Software der zweiten BGP-Instanz BGPspk2, die wiederum eine entsprechende Nachricht FSRlinkdown entlang eines Ersatzweges bzw. vieler Ersatzwege sendet. Die Nachricht FSRlinkdown benachrichtig die jeweilige Empfänger-Instanz über den Linkausfall und löst eine erfindungsgemäße schnelle Reaktion auf den Linkausfall bei dem Empfänger aus. Während der schnellen Reaktion auf den Linkausfall wird auf der BGP-Protokollebene ein regelrechtes Funktionieren des ausgefallenen Links simuliert. Zu diesem Zweck schickt die FSR-Software FSR der ersten BGP-Instanz BGPspk1 BGP-Keepalive-Nachrichten BGP(Keepalive) zu der BGP-Software BGP. Die FSR-Software FSR agiert sozusagen als Proxy für die BGP-Instanz auf der anderen Seite des ausgefallenen Links, um eine Wegeneuberechnung im Netz durch das BGP-Protokoll zu blockieren.

Falls vor Ablauf der Zeitspanne die Funktionstüchtigkeit des Links wieder wiederhergestellt wird und der ersten BGP-Instanz BGPspk1 mitgeteilt wird (im Bild durch die Nachricht Linkrecv gekennzeichnet), informiert die FSR-Software FSR der ersten BGP-Instanz BGPspk1 durch die Nachricht FSRrecv die zweiten BGP-Instanz BGPspk2, dass der Link wieder in Betrieb genommen wurde. Diese Nachricht FSRrecv wird entlang der Ersatzwege propagiert. Die auf den Ersatzwegen liegenden BGP-Instanzen haben nach Empfang der Nachricht über den Ausfall des Links die über den ausgefallenen Links führenden Wege durch andere Wege ersetzt und die ersetzten Wege als temporär nicht verfügbar gekennzeichnet. Diese so gekennzeichneten Wege können nach Empfang der Nachricht über die Erholung des Links wieder in Betrieb genommen werden. Nach Erholung des ausgefallenen Links werden durch die erste BGP-Instanz BGPspk1 wieder BGP-Keepalive-Nachrichten BGP(Keepalive) über den wieder in Betrieb genommenen Link empfangen.

Die dritte Periode Pererr (steht für Persistent Error) zeigt die Reaktion bei länger anhaltenden Linkausfällen. Nach Ablauf eines Timers Texp (steht für Timer Expired) wird von der FSR-Software FSR der ersten BGP-Instanz BGPspk1 eine Nachricht FSRpererr (steht für FSR Persistant Error) an die zweite BGP-Instanz BGPspk2 geschickt, durch die signalisiert wird, dass es sich um einen dauerhaften Fehler handelt. Die als temporär nicht verfügbar gekennzeichneten Wege können nun aus dem (den) Routing-Tabellen entfernt werden. Die FSR-Software FSR des ersten BGP-Speakers BGPspk1 simuliert nun nicht mehr die Funktionstüchtigkeit des ausgefallenen Links an die BGP-Software BGP, sondern sendet eine Benachrichtigung BGPlinkdown, die den Ausfall des Links der BGP-Software BGP mitteilt. Als Reaktion daraufhin werden dann BGP-Update-Nachrichten BGP(Update) durch das ganze Netz propagiert, die eine Neuberechnung von Wegen anstoßen.

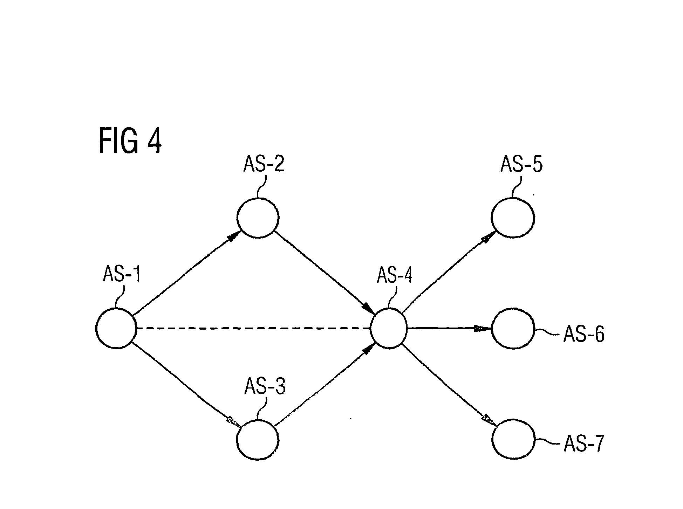

Die Auswahl von Alternativwegen durch die Routing-Domänen bzw. BGP-Instanzen entlang der Ersatzwege erfolgt i.a. anhand von zwei Kriterien, nämlich erstens, dass der Ersatzweg nicht über den ausgefallenen Link führt und (der Ersatzweg muss die Bedingung erfüllen, dass er eine ECHTE Substitution des ausgefallenen Links darstellt) zweitens, dass der Ersatzweg entsprechend einer lokal verwendeten Metrik optimal ist. Der Ersatzweg stellt im Endeffekt eine Substitution des ausgefallenen Links für das Routing von Datenpakete zur Verfügung. Eine Metrik zur Identifizierung des besten Alternativweges bei mehreren Optionen für die Festlegung eines Alternativweges kann beispielsweise Kriterien wie die Anzahl der Hops bis zu einem Ziel berücksichtigen. Die jeweils verwendete Metrik ist insofern lokal, als der jeweiligen Routing-Domäne nicht bekannte Routing-Strategien anderer Routing-Domänen nicht berücksichtigt werden. Vor allem in Hinblick auf unterschiedliche Routing-Strategien bzw. Routing-Policies empfiehlt es sich, für einen ausgefallenen Weg mehrere alternative Wege zu identifizieren bzw. auszuwählen und mehrere Ersatzwege bereitzustellen. Diesen Zusammenhang kann man auch von einem Fächer alternativer Wege bzw. einem Fächer von Ersatzwegen sprechen. Anhand von Fig. 4 wird die Nützlichkeit von mehreren Ersatzwegen genauer erläutert. In der Figur gezeigt sind Autonome Systeme AS-1 bis AS-7. Der gestrichelt gezeichnete Link zwischen den Autonomen Systemen AS-1 und AS-4 sei ausgefallen. Von den Autonomen System AS-1 zu dem Autonomen System AS-4 werden nun zwei Ersatzwege bereitgestellt, die über das Autonome System AS-2 bzw. das Autonome System AS-3 führen. Über das Autonome System AS-4 können die Autonomen Systeme AS-5, AS-6 und AS-7 erreicht werden. Angenommen, Datenpakete die vom Autonomen System AS-1 zum Autonomen System AS-7 übertragen werden, sollen nicht über das autonome System AS-2 übertragen werden, beispielsweise weil der Betreiber des Autonomen Systems AS-2 aus vertraglichen Gründen keinen entsprechenden Verkehr befördert oder weil er eine andere Nationalität besitzt, so dass aus Sicherheitserwägungen entsprechender Verkehr nicht über seine Routing-Domäne befördert werden soll. Diesem Fall steht ein zweiter Weg, nämlich über das autonome System AS-3, zur Verfügung, über das Verkehr zum Autonomen System AS-7 befördert werde kann. Die zwei verschiedenen Wege über die Autonomen Systeme AS-2 und AS-3 können in Abhängigkeit des Autonomen Systems, zu dem der Verkehr übertragen wird, beispielsweise AS-5, AS-6 und AS-7 in Abhängigkeit der Routing-Strategie des jeweiligen Zielnetzes ausgewählt werden. Die Bereitstellung von mehreren Ersatzwegen kann so dazu beitragen, dass Routing-Strategien beim Routing des Verkehrs entlang eines Ersatzweges berücksichtigt werden.

## Patentansprüche

1. Verfahren zur schnellen Reaktion auf den Ausfall eines Links zwischen zwei Routing-Domänen (AS-6, AS-8) in einem paketorientierten Netz, bei dem
- durch eine der Routing-Domänen (AS-6, AS-8) der Ausfall des Links festgestellt wird,
- für wenigstens einen Weg zu einem Zielpunkt, der über den ausgefallenen Link führt, wenigstens ein Ersatzweg zu dem Zielpunkt bereitgestellt wird, indem
-- eine Nachricht über den Linkausfall nur entlang des einen oder mehrerer Ersatzwege propagiert wird, wodurch auf dem Ersatzweg liegende Routing-Domänen (AS-5, AS-7) benachrichtigt werden und
-- benachrichtigte Routing-Domänen (AS-5, AS-7), die auf dem Ersatzweg liegen, ihr Inter-Domänen-Routing entsprechend eines Routings zu dem Zielpunkt entlang des Ersatzweges einstellen, bis alle Routing-Domänen (AS-5, AS-6) auf dem Ersatzweg ihr Inter-Domänen-Routing entsprechend einem Routing auf dem Ersatzweg zu dem Zielpunkt eingestellt haben.

2. Verfahren nach Anspruch 1,
**dadurch gekennzeichnet,**
- **dass** ein Router (BGPspk1) einer Routing-Domäne über den Linkausfall benachrichtigt wird,
- **dass** durch den Router (BGPspk1) der Routing-Domäne ein Alternativweg zu dem über den ausgefallenen Link führenden Weg ausgewählt wird, der nicht über den ausgefallenen Link führt,
- **dass** die Adresse eines zu dem auf dem Alternativweg nächsten Routing-Domäne gehörigen Routers (BGPspk2) als nächstes Ziel für das Inter-Domänen-Routing zu dem Zielpunkt festgelegt wird, und
- **dass** eine Nachricht zu der nächsten Routing-Domäne auf dem Alternativweg gesendet wird, durch die die nächste Routing-Domäne über den Linkausfall benachrichtig wird.

3. Verfahren nach Anspruch 1 oder 2,
**dadurch gekennzeichnet,**
- **dass** ein Router einer Routing-Domäne über den Linkausfall benachrichtigt wird,
- **dass** der Router für einen über den ausgefallenen Link führenden Weg überprüft, ob bereits ein Ersatzweg eingerichtet wurde,
- **dass** bei Vorhandensein eines Ersatzweges keine Nachricht über den Linkausfall zu der nächsten Routing-Domäne auf dem Ersatzweg gesendet wird.

4. Verfahren nach einem der vorhergehenden Ansprüche,
**dadurch gekennzeichnet,**
- **dass** ein Router (BGPspk1, BGPspk2) einer Routing-Domäne über den Linkausfall benachrichtigt wird,
- **dass** durch den Router (BGPspk1, BGPspk2) Alternativwege zu jeden über den ausgefallenen Link führenden Weg ausgewählt wird, der nicht über den ausgefallenen Link führt, und
- **dass** die Adresse eines zu der auf dem jeweiligen Alternativweg nächsten Routing-Domäne gehörigen Routers als nächstes Ziel für das Inter-Domänen-Routing zu dem Zielpunkt des jeweiligen ausgefallenen Wegs festgelegt wird.

5. Verfahren nach einem der vorhergehenden Ansprüche,
**dadurch gekennzeichnet,**
- **dass** durch einen Router (BGPspk1) mehr als ein Alternativweg zu einem über den ausgefallenen Link führenden Weg ausgewählt wird, wobei die ausgewählten Alternativwege nicht über den ausgefallenen Link führen, und
- **dass** die Adresse eines zu der auf einem Alternativweg nächsten Routing-Domäne gehörigen Routers (BGPspk2) als nächstes Ziel für Routing zu dem Zielpunkt des ausgefallenen Weges festgelegt wird und wenigstens für einen zweiten Alternativweg die Adresse eines zu der auf dem zweiten Alternativweg nächsten Routing-Domäne gehörigen Routers als alternatives nächstes Ziel für das Inter-Domänen-Routing zum Zielpunkt festgesetzt wird.

6. Verfahren nach einem der vorhergehenden Ansprüche,
**dadurch gekennzeichnet,**
- **dass** durch einen Router (BGPspk1) mehr als ein Alternativweg zu einem über den ausgefallenen Link führenden Weg ausgewählt wird, wobei die ausgewählten Alternativwege nicht über den ausgefallenen Link führen,
- **dass** die Adresse eines zu der auf einem ersten Alternativweg nächsten Routing-Domäne gehörigen Routers (BGPspk2) als nächstes Ziel für Routing zu dem Zielpunkt des über den ausgefallenen Link führenden Weges festgelegt wird und wenigstens für einen zweiten Alternativweg die Adresse eines zu der auf dem zweiten Alternativweg nächsten Routing-Domäne gehörigen Routers ebenfalls als nächstes Ziel für das Inter-Domänen-Routing zum Zielpunkt festgesetzt wird, und
- **dass** anhand von sich auf Datenpakete beziehenden Parametern das nächste Ziel bei Inter-Domänen-Routing auf einem Ersatzweg für den über den ausgefallenen Link führenden Weg bestimmt wird.

7. Verfahren nach einem der vorhergehenden Ansprüche,
**dadurch gekennzeichnet,**
- **dass** ein Protokoll gegeben ist, dass eine netzweite Propagation von Nachrichten zur Ermittlung (Berechnung) optimaler Wege vorsieht, und
- **dass** nach dem Linkausfall für eine Zeitspanne eine den Linkausfall berücksichtigende Neuermittlung von optimalen Wegen für das Inter-Domänen-Routing mittels des Protokolls unterdrückt wird.

8. Verfahren nach Anspruch 7,
**dadurch gekennzeichnet,**
- **dass** nach Ablauf der Zeitspanne eine netzweite Propagation von Nachrichten zur Ermittlung optimaler Wege für das Inter-Domänen-Routing dann vorgenommen wird, wenn der Linkausfall noch Bestand hat.

9. Verfahren nach Anspruch 7 oder 8,
**dadurch gekennzeichnet,**
- **dass** das Protokoll zur Neuermittlung von optimalen Wegen das BGP (Border Gateway Protocol) Protokoll ist.

10. Verfahren nach einem der vorhergehenden Ansprüche,
**dadurch gekennzeichnet,**
- **dass** ein durch einen Alternativweg ersetzter Weg im Hinblick auf eine mögliche Wiederinbetriebnahme markiert wird.

11. Router mit Mitteln zur Durchführung eines Verfahrens nach einem der Ansprüche 1 bis 10.

## Claims

1. Method for responding rapidly to the failure of a link between two routing domains (AS-6, AS-8) in a packet-oriented network, whereby
- the failure of the link is detected by one of the routing domains (AS-6, AS-8),
- for at least one route to a destination point, which passes via the failed link, at least one substitute route is provided to the destination point, in that
-- a message about the link failure is propagated only along the one or more substitute routes, by means of which routing domains (AS-5, AS-7) lying along the substitute route are notified and
-- routing domains (AS-5, AS-7) which have been notified and which lie along the substitute route adjust their inter-domain routing to give a routing to the destination point along the substitute route, until all the routing domains (AS-5, AS-6) on the substitute route have adjusted their inter-domain routing to give a routing to the destination point along the substitute route.

2. Method according to claim 1
**characterised in that**
- a router (BGPspk1) in a routing domain is notified about the link failure,
- the router (BGPspk1) in the routing domain selects an alternative route to the route which passes via the failed link, which does not pass via the failed link,
- the address of a router (BGPspk2) in the next routing domain on the alternative route is specified as the next destination for the inter-domain routing to the destination point, and
- a message is sent to the next routing domain on the alternative route, notifying the next routing domain about the link failure.

3. Method according to claim 1 or 2,
**characterised in that**
- a router in a routing domain is notified about the link failure,
- for a route which passes via the failed link, the router checks whether a substitute route has already been set up,
- if there is such a substitute route, no message about the link failure will be sent to the next routing domain on the substitute route.

4. Method according to one of the preceding claims,
**characterised in that**
- a router (BGPspk1, BGPspk2) in a routing domain is notified about the link failure,
- for each of the routes which pass via the failed link, the router (BGPspk1, BGPspk2) selects alternative routes which do not pass via the failed link, and
- the address of a router belonging to the next routing domain along the alternative route concerned is specified as the next destination for the inter-domain routing to the destination point of the route concerned which has failed.

5. Method according to one of the preceding claims,
**characterised in that**
- a router (BGPspk1) selects more than one alternative route to a route which passes via the failed link, such that the selected alternative routes do not pass via the failed link, and
- the address of a router (BGPspk2) which belongs to the next routing domain on an alternative route is specified as the next destination for the routing to the destination point of the failed link and for at least one second alternative route the address of a router which belongs to the next routing domain on the second alternative route is specified as the alternative next destination for the inter-domain routing to the destination point.

6. Method according to one of the preceding claims,
**characterised in that**
- a router (BGPspk1) selects more than one alternative route to a route which passes via the failed link, whereby the selected alternative routes do not pass via the failed link,
- the address of a router (BGPspk2) which belongs to the next routing domain on a first alternative route is specified as the next destination for the routing to the destination point of the route which passes via the failed link, and for at least one second alternative route the address of a router which belongs to the next routing domain on the second alternative route is again specified as the next destination for the inter-domain routing to the destination point, and
- for inter-domain routing over a substitute route for the route which passes via the failed link, the next destination is determined by reference to parameters which relate to data packets.

7. Method according to one of the preceding claims,
**characterised in that**
- there is a protocol which provides for the network-wide propagation of messages for determining (calculating) optimal routes, and
- after a link failure, any redetermination of the optimal routes for inter-domain routing to take into account the link failure is suppressed for a time period by means of the protocol.

8. Method according to claim 7
**characterised in that**
- after the time period has expired, a network-wide propagation of messages for the determination of optimal routes for inter-domain routing is then undertaken if the link failure is still extant.

9. Method according to claim 7 or 8,
**characterised in that**
- the protocol used for the redetermination of optimal routes is the BGP (Border Gateway Protocol) protocol.

10. Method according to one of the preceding claims,
**characterised in that**
- a route which has been replaced by an alternative route is marked with respect to its possible restoration to service.

11. Router with facilities for carrying out a method according to one of the claims 1 to 10

## Revendications

1. Procédé pour réagir rapidement à la défaillance d'une liaison entre deux domaines de routage (AS-6, AS-8) dans un réseau orienté paquets, dans lequel
- la défaillance de la liaison est constatée par l'un des domaines de routage (AS-6, AS-8),
- pour au moins un chemin vers un point de destination passant par la liaison défaillante, au moins un chemin de remplacement vers le point de destination est mis à disposition, ceci par le fait que
-- un message concernant la défaillance de la liaison n'est propagé que le long de l'un chemin de remplacement ou de plusieurs chemins de remplacement, ce par quoi des domaines de routage situés sur le chemin de remplacement (AS-5 ,AS-7) sont informés et
-- des domaines de routage informés (AS-5 ,AS-7), qui se trouvent sur le chemin de remplacement, règlent leur routage interdomaine conformément à un routage vers le point de destination le long du chemin de remplacement jusqu'à ce que tous les domaines de routage (AS-5, AS-6) sur le chemin de remplacement aient réglé leur routage interdomaine conformément à un routage sur le chemin de remplacement vers le point de destination.

2. Procédé selon la revendication 1, **caractérisé en ce que**
- un routeur (BGPspk1) d'un domaine de routage est informé de la défaillance de la liaison,
- un chemin alternatif au chemin passant par la liaison défaillante, lequel ne passe pas par la liaison défaillante, est sélectionné par le routeur (BGPspk1) du domaine de routage,
- l'adresse d'un routeur (BGPspk2) appartenant au domaine de routage suivant sur le chemin alternatif est déterminée en tant que destination suivante pour le routage interdomaine vers le point de destination et
- un message par lequel le domaine de routage suivant est informé de la défaillance de la liaison est envoyé au domaine de routage suivant sur le chemin alternatif.

3. Procédé selon la revendication 1 ou 2, **caractérisé en ce que**
- un routeur d'un domaine de routage est informé de la défaillance de la liaison,
- le routeur vérifie, pour un chemin passant par la liaison défaillante, si un chemin de remplacement a déjà été établi,
- en présence d'un chemin de remplacement, aucun message sur la défaillance de la liaison n'est envoyé au domaine de routage suivant sur le chemin de remplacement.

4. Procédé selon l'une des revendications précédentes,
**caractérisé en ce que**
- un routeur (BGPspk1, BGPspk2) d'un domaine de routage est informé de la défaillance de la liaison,
- des chemins alternatifs à chaque chemin passant par la liaison défaillante, lequel ne passe pas par la liaison défaillante, sont sélectionnés par le routeur (BGPspk1, BGPspk2), et
- l'adresse d'un routeur appartenant au domaine de routage suivant sur le chemin alternatif respectif est déterminée en tant que destination suivante pour le routage interdomaine vers le point de destination du chemin défaillant respectif.

5. Procédé selon l'une des revendications précédentes,
**caractérisé en ce que**
- plus d'un chemin alternatif à un chemin passant par la liaison défaillante est sélectionné par un routeur (BGPspk1), les chemins alternatifs sélectionnés ne passant pas par la liaison défaillante, et
- l'adresse d'un routeur (BGPspk2) appartenant au domaine de routage suivant sur un chemin alternatif est déterminée en tant que destination suivante pour le routage vers le point de destination du chemin défaillant et l'adresse d'un routeur appartenant au domaine de routage suivant sur le deuxième chemin alternatif est déterminée, au moins pour un deuxième chemin alternatif, en tant que destination suivante alternative pour le routage interdomaine vers le point de destination.

6. Procédé selon l'une des revendications précédentes,
**caractérisé en ce que**
- plus d'un chemin alternatif à un chemin passant par la liaison défaillante est sélectionné par un routeur (BGPspk1), les chemins alternatifs sélectionnés ne passant pas par la liaison défaillante,
- l'adresse d'un routeur (BGPspk2) appartenant au domaine de routage suivant sur un premier chemin alternatif est déterminée en tant que destination suivante pour le routage vers le point de destination du chemin passant par la liaison défaillante et, au moins pour un deuxième chemin alternatif, l'adresse d'un routeur appartenant au domaine de routage suivant sur le deuxième chemin alternatif est également déterminée en tant que destination suivante pour le routage interdomaine vers le point de destination et
- à l'aide de paramètres se référant à des paquets de données, la destination suivante est déterminée, dans le cas du routage interdomaine, sur un chemin de remplacement pour le chemin passant par la liaison défaillante.

7. Procédé selon l'une des revendications précédentes,
**caractérisé en ce que**
- il existe un protocole qui prévoit une propagation, à l'échelle du réseau, de messages pour la détermination (calcul) de chemins optimaux et
- après la défaillance de la liaison, une nouvelle détermination de chemins optimaux pour le routage interdomaine, laquelle tient compte de la défaillance de la liaison, est supprimée au moyen du protocole pour un espace de temps.

8. Procédé selon la revendication 7, **caractérisé en ce**
- **que**, après l'expiration de l'espace de temps, une propagation, à l'échelle du réseau, de messages pour la détermination de chemins optimaux pour le routage interdomaine est opérée si la défaillance de la liaison subsiste encore.

9. Procédé selon la revendication 7 ou 8, **caractérisé en ce**
- **que** le protocole pour la nouvelle détermination de chemins optimaux est le protocole BGP (Border Gateway Protocol).

10. Procédé selon l'une des revendications précédentes,
**caractérisé en ce**
- **qu'**un chemin remplacé par un chemin alternatif est marqué en vue d'une remise en service possible.

11. Routeur comprenant des moyens permettant la mise en oeuvre d'un procédé selon l'une des revendications 1 à 10.
